# EUROPÄISCHE PATENTSCHRIFT

(11) **EP 2 453 541 B1**
(45) Veröffentlichungstag und Bekanntmachung des Hinweises auf die Patenterteilung: **25.01.2017**
(21) Anmeldenummer: 11175928.8
(22) Anmeldetag: 29.07.2011
(51) Int. Cl.: H02G 3/14, H02G 3/10, H02G 3/12

(54) **Elektrische Schaltgeräteanordnung**
Electric switching gear assembly
Agencement de commutateurs électriques

(30) Priorität: 16.11.2010 DE 102010060572
(43) Veröffentlichungstag der Anmeldung: 16.05.2012
(73) Patentinhaber: Albrecht Jung GmbH & Co. KG, 58579 Schalksmühle (DE)
(72) Erfinder: Ritter, Carla, 58553 Halver (DE); Rodemann, Burkhard, 58579 Schalksmühle (DE)

(56) Entgegenhaltungen:
- EP-A2- 1 343 240
- EP-A2- 2 043 123
- US-A- 5 189 259

## Beschreibung

Die vorliegende Erfindung geht von einer gemäß Oberbegriff des Hauptanspruches konzipierten elektrischen Schaltgeräteanordnung aus.

Derartige elektrische Schaltgeräteanordnungen sind in der Regel dafür vorgesehen, die Ein- und Ausschaltung eines Stromkreises bzw. die Umschaltung von einem auf einen anderen Stromkreis zu bewirken. Bei solchen elektrischen Schaltgeräteanordnungen können die unterschiedlichsten Kontaktsysteme Anwendung finden. Die Betätigung solcher elektrischen Schaltgeräteanordnungen kann z. B. durch ein Verschwenken eines als Betätigungswippe ausgebildeten Betätigungselementes von einer Ausgangsposition in eine oder mehrere Funktionsstellungen erfolgen, wobei die Funktionsstellungen rastend und/oder tastend ausgeführt sein können. Selbstverständlich kann bei einer derartigen elektrischen Schaltgeräteanordnung jedoch auch ein Tastschalter zur Anwendung kommen, wobei dann das Betätigungselement durch Drucktasten ausgehend von seiner Ruheposition in seine Schaltposition gebracht wird. Oftmals sind solche elektrischen Schaltgeräteanordnungen mit einem Leuchtmittel ausgerüstet, damit entweder eine Funktionsanzeige und/oder eine Suchbeleuchtung realisiert werden kann bzw. können. Im vorliegenden Fall ist die Schaltgeräteanordnung mit einem besonders großflächig ausgeführten Betätigungselement versehen, d. h. dieses überdeckt zumindest zwei Einbauplätze der zum Einsatz kommenden elektrischen Schaltgeräte.

Eine dem Oberbegriff des Hauptanspruches entsprechende elektrische Schaltgeräteanordnung ist durch den Katalog der Firma Jung aus dem Jahre 2010, Seiten 388 und 389 bekannt geworden. Diese elektrische Schaltgeräteanordnung bestehend aus einem elektrischen Schaltgerät und einer drei Einbauplätze solcher elektrischen Schaltgeräte überdeckenden Designbaugruppe, wobei das elektrische Schaltgerät mit einem Betätigungselement versehen ist, welches ebenfalls drei Einbauplätze solcher Schaltgeräte überdeckt. Das elektrische Schaltgerät ist als Wippenschalter ausgebildet und die Designbaugruppe besteht aus einer Funktionsplatte, welche untrennbar mit einem Designrahmen umgeben ist. Oftmals besteht jedoch der Bedarf, eine solche Schaltgeräteanordnung zusätzlich mit weiteren elektrischen Geräten wie Schutzkontaktsteckdosen, Bewegungsmeldern, Orientierungslichtern, usw. zu versehen. Bei einer solchen Ausführung müssen solche weiteren elektrischen Geräte jedoch mittels eines separaten Designrahmens in Zuordnung zu der bekannten Schaltgeräteanordnung installiert werden, was nicht nur unschön aussieht, sondern auch vergleichsweise teuer und aufwändig ist.

Zudem ist durch die EP 2 043 123 A2 ein elektrisches/elektronisches Installationsgerät, insbesondere ein Türkommunikationsgerät, bekannt geworden. Dieses weist ein Gehäuse auf, dessen Sockelteil zur Aufnahme zumindest einer Funktionseinheit und dessen Deckelteil zumindest zur Anordnung und Aufnahme mehrerer Betätigungstasten vorgesehen ist. Zu dem Zweck ein elektrisches/elektronisches Installationsgerät zu schaffen, welches auch bei schwierigen Umgebungsbedingungen durch in der Nähe vorhandene Geräuschquellen eine besonders gute akustische Verständigung zwischen dem Wohnungsinhaber und dem Besucher ermöglicht, ist zumindest eine erste Gehäusekammer zur Aufnahme einer Lausprechereinheit vorgesehen, wobei zwischen dem Schallaustrittsbereich der Lautsprechereinheit und dem Deckelteil zumindest eine erste Dichtung angeordnet ist. Die Designbaugruppe eines solchen elektrischen/elektronischen Installationsgerätes überdeckt zwei Einbauplätze.

Außerdem sind durch die US 5 189 259 A Schaltgeräteanordnungen bekannt geworden, deren Designabdeckung ein oder zwei Einbauplätze überdeckt. Die zugehörigen Schaltgeräte dieser Schaltgeräteanordnungen können verschiedenartig ausgeführt sein.

Der vorliegenden Erfindung liegt deshalb die Aufgabe zugrunde eine elektrische Schaltgeräteanordnung zu schaffen, dessen Designbaugruppe derart ausgerührt ist, so dass Designrahmen mit beliebig vielen Aufnahmemöglichkeiten zur bedarfsweisen Installation weiterer elektrischer Geräte Verwendung finden können. Diese Aufgabe wird durch die im kennzeichnenden Teil des Hauptanspruches angegebenen Merkmale gelöst. Bei einer solchermaßen ausgebildeten elektrischen Schaltgeräteanordnung ist besonders vorteilhaft, dass die Anordnung der zu installierenden Geräte bei einem zumindest drei Aufnahmemöglichkeiten bietenden Designrahmen beliebig bzw. je nach Bedarf gewählt werden kann. Weiter ist besonders vorteilhaft, dass die sich schon im üblichen Verkaufsprogramm befindlichen Designrahmen unterschiedlicher Designlinien ohne Änderungen vornehmen zu müssen Verwendung finden können.

Weitere vorteilhafte Ausgestaltungen des erfindungsgemäßen Gegenstandes sind in den Unteransprüchen angegeben und werden anhand dreier in den Zeichnungen dargestellter Ausführungsbeispiele näher erläutert. Dabei zeigen:
- Fig. 1:: prinziphaft ein erstes Ausführungsbeispiel einer solchen elektrischen Schaltgeräteanordung räumlich in Explosionsdarstellung;
- Fig. 2:: prinziphaft ein zweites Ausführungsbeispiel einer solchen elektrischen Schaltgeräteanordung räumlich in Explosionsdarstellung;
- Fig. 3:: prinziphaft ein drittes Ausführungsbeispiel einer solchen elektrischen Schaltgeräteanordung, sowie ein zugeorndetes weiteres elektrisches Gerät, räumlich in Explosionsdarstellung;
- Fig. 4:: prinziphaft die Rückseite der Funktionsplatte in räumlicher Darstellung;
- Fig. 5:: prinziphaft die Rückseite des Betätigungselementes in räumlicher Darstellung.

Wie aus den Figuren hervorgeht, besteht eine solche elektrische Schaltgeräteanordnung im wesentlichen aus einem elektrischen Schaltgerät 1 und einer zumindest drei Einbauplätze solcher elektrischen Schaltgeräte 1 überdeckenden Designbaugruppe, wobei das elektrische Schaltgerät 1 mit einem Betätigungselement 2 versehen ist, welches drei Einbauplätze solcher elektrischen Schaltgeräte 1 überdeckt, und wobei die Designbaugruppe aus einem Designrahmen 3 und aus einer wieder lösbar in den Designrahmen 3 einsetzbaren Funktionsplatte 4 besteht. Die Funktionsplatte 4 überdeckt ebenfalls drei Einbauplätze solcher elektrischen Schaltgeräte 1.

Wie des Weiteren aus den Figuren hervorgeht, sind an die Funktionsplatte 4 vier mit dem Designrahmen 3 zusammenwirkende Clipshaken 5 angeformt. Zwei Clipshaken 5 sind dabei jeweils an den beiden Schmalseiten der Funktionsplatte 4 vorhanden. Zudem weist die Funktionsplatte 4 eine die Kopplung zwischen dem elektrischen Schaltgerät 1 und dem zugehörigen Betätigungselement 2 ermöglichende Öffnung 6 auf. Zur Realisierung eines effektiven Spritzwasserschutzes ist die Öffnung 6 von einem einstückig an die Vorderseite der Funktionsplatte 4 angeformten Schutzkragen 7 umgeben. Zum gleichen Zweck ist zudem rückseitig an den Außenbereich der Funktionsplatte 4 eine umlaufende Wasserabtropfkante 8 angeformt. Zur funktionsgerechten Lagerung des Betätigungselementes 2 sind an die Vorderseite der Funktionsplatte 4 zwei Lagerelemente 9 angeformt, in welche haltend zwei entsprechend ausgeführte an der Rückseite des Betätigungselementes 2 angeordnete Lagergegenelemente 10 eingreifen. Außerdem ist an der Rückseite des Betätigungselements 2 eine mit dem Schutzkragen 7 der Funktionsplatte 4 zusammenwirkende Gegenkontur 11 vorhanden. Zur Kopplung mit dem Schaltgerät 1 sind zudem zwei Koppelelemente 12 vorgesehen, die an die Rückseite des Betätigungselementes 2 angeformt sind. Das Schaltgerät 1 ist bei den dargestellten Ausführungsbeispielen jeweils als Wippenschalter ausgeführt.

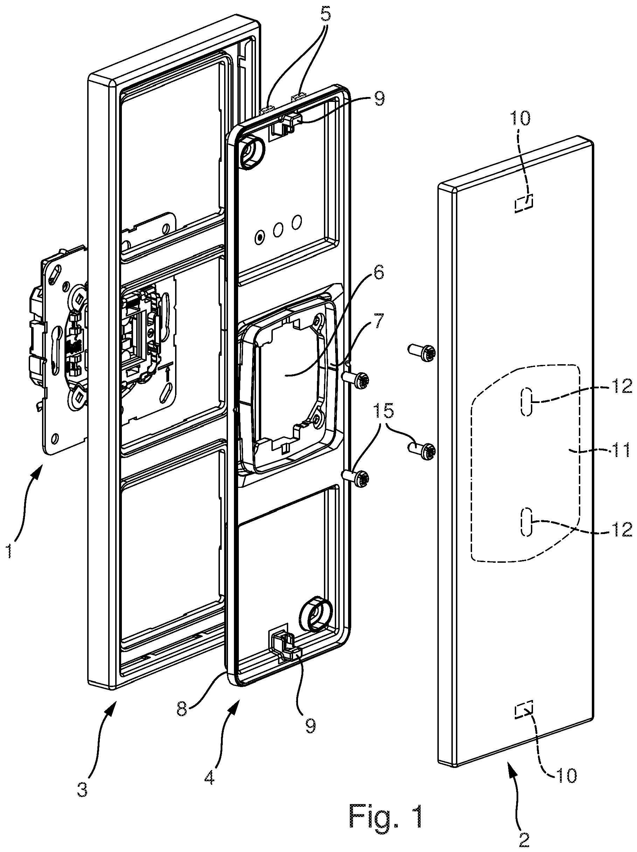

Wie insbesondere aus Figur 1 hervorgeht, ist das Schaltgerät 1 und der Designrahmen 3 zur Durchführung einer Unterputzinstallation ausgeführt. Die Designbaugruppe überdeckt drei Einbauplätze eines solchen elektrischen Schaltgerätes 1. Das als Betätigungswippe ausgeführte Betätigungselement 2 überdeckt ebenfalls drei Einbauplätze solcher elektrischen Schaltgeräte 1 und auch die Funktionsplatte 4 ist zur Überdeckung von drei Einbauplätzen vorgesehen. Somit ist die Schaltgeräteanordnung darauf ausgerichtet, eine Größenordnung abzudecken, die normalerweise mittels dreier Schaltgeräte 1 normaler Baugröße abgedeckt wird.

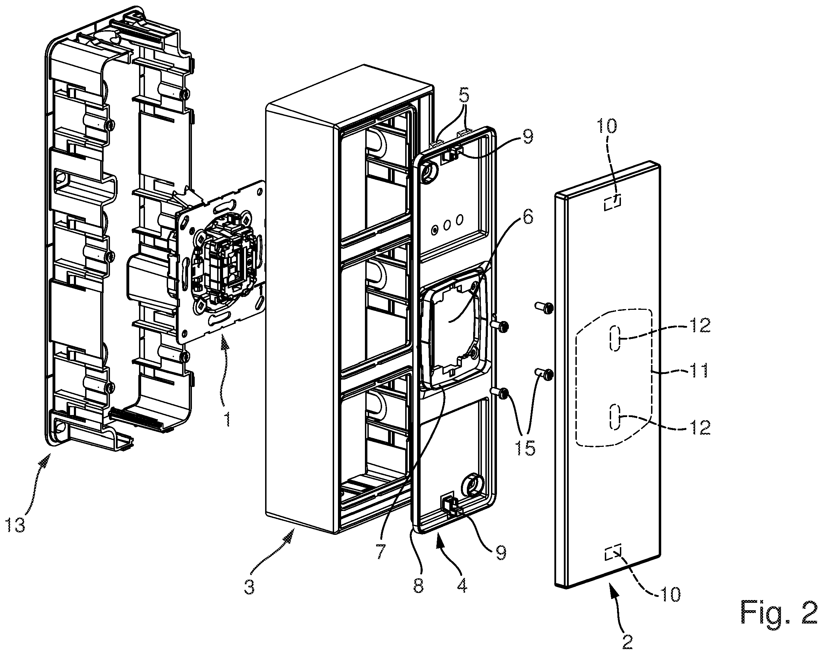

Wie insbesondere aus Figur 2 hervorgeht, ist das Schaltgerät 1 und der Designrahmen 3 zur Durchführung einer Aufputzinstallation ausgeführt. Dazu ist dem Designrahmen 3 zusätzlich ein Aufputzgehäuseteil 13 zugeordnet. Die Designbaugruppe überdeckt drei Einbauplätze eines solchen elektrischen Schaltgerätes 1. Das als Betätigungswippe ausgeführte Betätigungselement 2 überdeckt ebenfalls drei Einbauplätze solcher elektrischen Schaltgeräte 1 und auch die Funktionsplatte 4 ist zur Überdeckung von drei Einbauplätzen vorgesehen. Somit ist die Schaltgeräteanordnung darauf ausgerichtet, eine Größenordnung abzudecken, die normalerweise mittels dreier Schaltgeräte 1 normaler Baugröße abgedeckt wird.

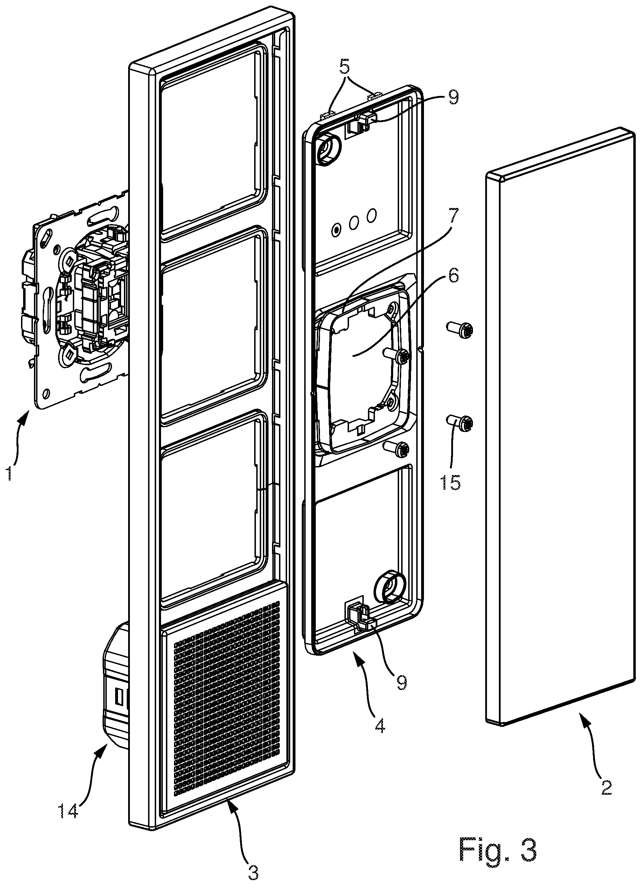

Wie insbesondere aus Figur 3 hervorgeht, ist das Schaltgerät 1 und der Designrahmen 3 zur Durchführung einer Unterputzinstallation ausgeführt. Die Designbaugruppe überdeckt vier Einbauplätze eines solchen elektrischen Schaltgerätes 1. Das als Betätigungswippe ausgeführte Betätigungselement 2 überdeckt lediglich drei Einbauplätze solcher elektrischen Schaltgeräte 1, und auch die Funktionsplatte 4 ist zur Überdeckung von drei Einbauplätzen vorgesehen. Somit besteht die Möglichkeit, bei Verwendung nur eines einzigen Designrahmens 3 ein weiteres elektrisches Gerät 14 in die direkte Umgebung der Schaltgeräteanordnung einfach und formschön zu integrieren. Die Anordnung der zu installierenden elektrischen Geräte 1, 14 kann somit beliebig bzw. je nach Bedarf gewählt werden. Im vorliegenden Ausführungsbeispiel ist das weitere elektrische Gerät 14 als Lautsprecherbaugruppe ausgeführt und nimmt den unteren Einbauplatz ein. Genauso gut könnte ein solches weiteres elektrisches Gerät 14 aber auch als Schutzkontaktsteckdose, Bewegungsmelder, Orientierungslicht usw. ausgeführt sein und den oberen Einbauplatz einnehmen. Ebenfalls besteht die Möglichkeit, eine Designbaugruppe zu verwenden, deren Designrahmen 3 fünf, sechs oder mehr Einbauplätze für solche elektrischen Schaltgeräte 1 bzw. weiteren elektrischen Geräte 14 zur Verfügung stellt. Bedarfsweise ist somit auch die Installation mehrerer weiterer elektrischer Geräte 14 auf einfache Art und Weise formschön realisierbar. Besonders vorteilhaft ist bei einer solchen Ausführung, dass die Anordnung des elektrischen Schaltgerätes 1 und der weiteren elektrischen Geräte 14 hinsichtlich ihrer Einbauplätze beliebig bzw. je nach Bedarf gewählt werden kann. Weiterhin ist vorteilhaft, dass sich die schon im üblichen Verkaufsprogramm befindlichen Designrahmen unterschiedlicher Designlinien ohne Änderungen vornehmen zu müssen verwenden lassen. Ohne zusätzliche Kosten zu verursachen, lässt sich somit eine solche elektrische Schaltgeräteanordnung optisch abgestimmt in alle Designlinien integrieren.

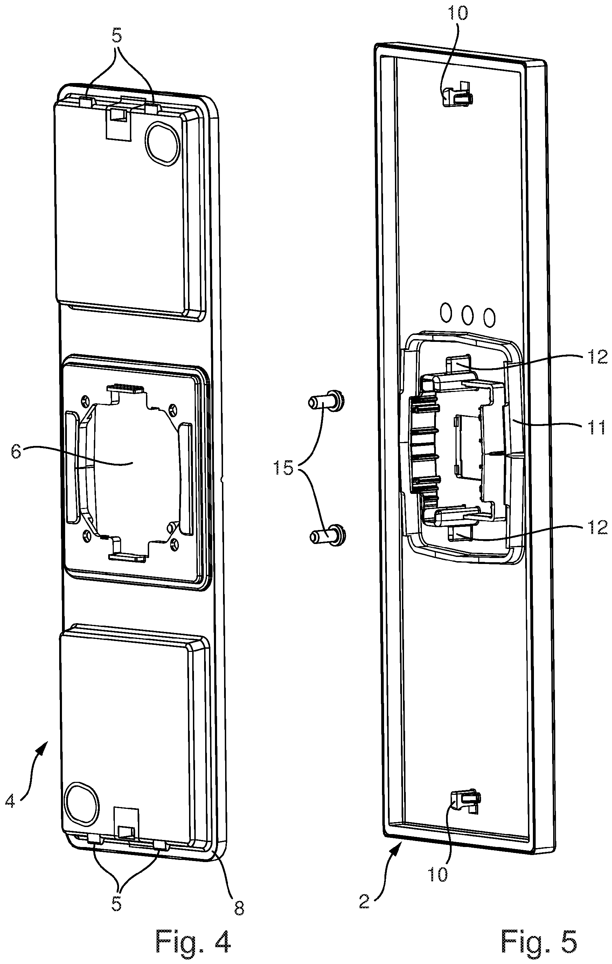

Wie insbesondere aus Figur 4 hervorgeht, sind die an die Rückseite der Funktionsplatte 4 angeformten Clipshaken 5 vergleichsweise klein ausgeführt, so dass sich die Funktionsplatte 4 auf besonders einfache Art und Weise aufgrund ihrer elastischen Verformbarkeit in den Designrahmen 3 einsetzen lässt, bzw. aus diesem wieder gelöst werden kann. Gleichzeitig sorgen diese Clipshaken 5 auch für eine sichere Befestigung der Funktionsplatte 4 im Designrahmen 3.

Wie insbesondere aus Figur 5 hervorgeht, sind zur exakten Lagerung des Betätigungselementes 2 zwei Lagerelemente 10 an die Rückseite des Betätigungselementes angeformt. Um einen guten Schutz gegen Spritzwasser zu bieten, ist, wie bereits schon erwähnt, eine Gegenkontur 11 an die Rückseite des Betätigungselementes 2 angeformt, welche mit dem Schutzkragen 7 der Funktionsplatte 4 zusammenwirkt. Außerdem befinden sich zwei stiftförmig ausgebildete Koppelelemente 12 einstückig an der Rückseite des Betätigungselementes 2, welche die mechanische Kopplung mit dem Schaltstück des elektrischen Schaltgerätes 1 herstellen.

Wie des weiteren aus den Figuren 1, 2 und 3 hervorgeht, besteht die Möglichkeit über Schrauben 15 die Funktionsplatte 4 am elektrischen Schaltgerät 1 zu befestigen. Durch eine solche Schraubverbindung ist dauerhaft ein besonders sicherer Halt der Designbaugruppe am Schaltgerät 1 gewährleistet.

## Patentansprüche

1. Elektrische Schaltgeräteanordnung, bestehend aus einem elektrischen Schaltgerät (1) und einer zumindest zwei Einbauplätze solcher elektrischen Schaltgeräte überdeckenden Designbaugruppe, wobei das elektrische Schaltgerät mit einem Betätigungselement (2) versehen ist, welches zumindest zwei Einbauplätze solcher Schaltgeräte überdeckt, **dadurch gekennzeichnet, dass** die Designbaugruppe aus einem Designrahmen (3) und aus einer wieder lösbar in den Designrahmen (3) einsetzbaren Funktionsplatte (4) besteht.

2. Elektrische Schaltgeräteanordnung nach Anspruch 1, **dadurch gekennzeichnet, dass** an die Funktionsplatte (4) zumindest ein mit dem Designrahmen (3) zusammenwirkender Clipshaken (5) angeformt ist.

3. Elektrische Schaltgeräteanordnung nach Anspruch 1 oder 2, **dadurch gekennzeichnet, dass** die Funktionsplatte (4) zumindest eine die Kopplung zwischen dem elektrischen Schaltgerät (1) und dem zugehörigen Betätigungselement (2) ermöglichende Öffnung (6) aufweist.

4. Elektrische Schaltgeräteanordnung nach Anspruch 3, **dadurch gekennzeichnet, dass** die zumindest eine Öffnung (6) der Funktionsplatte (4) von einem einstückig an die Funktionsplatte (4) angeformten Schutzkragen (7) umgeben ist.

5. Elektrische Schaltgeräteanordnung nach einem der Ansprüche 1 bis 4, **dadurch gekennzeichnet, dass** umlaufend an den Außenbereich der Funktionsplatte (4) eine Wasserabtropfkante (8) angeformt ist.

6. Elektrische Schaltgeräteanordnung nach einem der Ansprüche 1 bis 5, **dadurch gekennzeichnet, dass** an die Funktionsplatte (4) zumindest ein mit dem Betätigungselement (2) kooperierendes Lagerelement (9) angeformt ist.

7. Elektrische Schaltgeräteanordnung nach einem der Ansprüche 1 bis 6, **dadurch gekennzeichnet, dass** das elektrische Schaltgerät (1) als Wippenschalter ausgeführt ist.

8. Elektrische Schaltgeräteanordnung nach einem der Ansprüche 1 bis 6, **dadurch gekennzeichnet, dass** das elektrische Schaltgerät (1) als Tastschalter ausgeführt ist.

9. Elektrische Schaltgeräteanordnung nach einem der Ansprüche 1 bis 8, **dadurch gekennzeichnet, dass** der Designrahmen (3) zur Verwendung des Schaltgerätes (1) in einer Unterputzinstallation ausgeführt ist.

10. Elektrische Schaltgeräteanordnung nach einem der Ansprüche 1 bis 8, **dadurch gekennzeichnet, dass** der Designrahmen (3) zur Verwendung des Schaltgerätes (1) in einer Aufputzinstallation ausgeführt ist.

11. Elektrische Schaltgeräteanordnung nach einem der Ansprüche 1 bis 10, **dadurch gekennzeichnet, dass** das Betätigungselement (2) drei Einbauplätze für solche Schaltgeräte (1) überdeckt.

12. Elektrische Schaltgeräteanordnung nach einem der Ansprüche 1 bis 11, **dadurch gekennzeichnet, dass** die Designbaugruppe zumindest drei Einbauplätze für solche Schaltgeräte (1) überdeckt.

## Claims

1. Electric switchgear arrangement, consisting of an electric switchgear (1) and a design module covering at least two mounting spaces of such electric switchgear, wherein the electric switchgear is provided with an actuating element (2) covering at least two mounting spaces of such electric switchgear, **characterized by** the fact that the design module consists of a design frame (3) and of a function plate (4) to be inserted detachably into the design frame (3).

2. Electric switchgear arrangement in accordance with Claim 1, **characterized by** the fact that at least one clip (5) interacting with the design frame (3) is moulded to the function plate (4).

3. Electric switchgear arrangement in accordance with Claims 1 or 2, **characterized by** the fact that the function plate (4) provides at least one opening (6) allowing coupling of the electric switchgear (1) with the pertaining actuating element (2).

4. Electric switchgear arrangement in accordance with Claim 3, **characterized by** the fact that the at least one opening (6) of the function plate (4) is surrounded by a protective collar (7) moulded to the function plate (4) in one piece.

5. Electric switchgear arrangement in accordance with any of Claims 1 to 4, **characterized by** the fact that a surrounding water drip edge (8) is moulded to the outer edge of the function plate (4).

6. Electric switchgear arrangement in accordance with any of Claims 1 to 5, **characterized by** the fact that at least one bearing element (9) interacting with the actuating element (2) is moulded to the function plate (4).

7. Electric switchgear arrangement in accordance with any of Claims 1 to 6, **characterized by** the fact that the electric switchgear (1) is designed as rocker switch.

8. Electric switchgear arrangement in accordance with any of Claims 1 to 6, **characterized by** the fact that the electric switchgear (1) is designed as push button.

9. Electric switchgear arrangement in accordance with any of Claims 1 to 8, **characterized by** the fact that the design frame (3) is designed for use of the switchgear (1) in a flush-mounted installation.

10. Electric switchgear arrangement in accordance with any of Claims 1 to 8, **characterized by** the fact that the design frame (3) is designed for use of the switchgear (1) in a surface-mounted installation.

11. Electric switchgear arrangement in accordance with any of Claims 1 to 10, **characterized by** the fact that the actuating element (2) covers three mounting spaces for such switchgear (1).

12. Electric switchgear arrangement in accordance with any of Claims 1 to 11, **characterized by** the fact that the design module covers at least three mounting spaces for such switchgear (1).

## Revendications

1. Système d'appareils de commutation électrique, composé d'un appareil de commutation électrique (1) et d'un module design recouvrant au moins deux emplacements de montage pour de tels appareils de commutation électriques, l'appareil de commutation électrique étant muni d'un élément d'actionnement (2), lequel recouvre au moins deux emplacements de montage pour de tels appareils de commutation électriques, **caractérisé en ce que** le module design se compose d'un cadre design (3) et d'une plaque de fonction (4) pouvant être mise en place de manière détachable dans le cadre design (3).

2. Système d'appareils de commutation électrique selon la revendication 1, **caractérisé en ce que** au moins un crochet clip (5) agissant ensemble avec le cadre design (3) est moulé sur la plaque de fonction (4).

3. Système d'appareils de commutation électrique selon la revendication 1 ou 2, **caractérisé en ce que** la plaque de fonction (4) présente au moins un orifice (6) permettant la liaison entre l'appareil de commutation électrique (1) et l'élément d'actionnement (2) correspondant.

4. Système d'appareils de commutation électrique selon la revendication 3, **caractérisé en ce que** l'au moins un orifice (6) de la plaque de fonction (4) est entouré d'une collerette de protection (7) moulée en une pièce sur la plaque de fonction (4).

5. Système d'appareils de commutation électrique selon l'une des revendications 1 à 4, **caractérisé en ce que** un rebord égouttoir (8) est moulé sur le pourtour de la zone extérieure de la plaque de fonction (4).

6. Système d'appareils de commutation électrique selon l'une des revendications 1 à 5, **caractérisé en ce que** au moins un élément palier (9) coopérant avec l'élément d'actionnement (2) est moulé sur la plaque de fonction (4).

7. Système d'appareils de commutation électrique selon l'une des revendications 1 à 6, **caractérisé en ce que** l'appareil de commutation électrique (1) est réalisé sous forme d'interrupteur basculant.

8. Système d'appareils de commutation électrique selon l'une des revendications 1 à 6, **caractérisé en ce que** l'appareil de commutation électrique (1) est réalisé sous forme de touche.

9. Système d'appareils de commutation électrique selon l'une des revendications 1 à 8, **caractérisé en ce que** le cadre design (3) est réalisé pour l'utilisation de l'appareil de commutation (1) dans une installation encastrée ou sous crépi.

10. Système d'appareils de commutation électrique selon l'une des revendications 1 à 8, **caractérisé en ce que** le cadre design (3) est réalisé pour l'utilisation de l'appareil de commutation (1) dans une installation en saillie.

11. Système d'appareils de commutation électrique selon l'une des revendications 1 à 10, **caractérisé en ce que** l'élément d'actionnement (2) recouvre trois emplacements de montage pour de tels appareils de commutation (1).

12. Système d'appareils de commutation électrique selon l'une des revendications 1 à 11, **caractérisé en ce que** le module design recouvre au moins trois emplacements de montage pour de tels appareils de commutation (1).
